# EUROPEAN PATENT SPECIFICATION

(11) **EP 2 691 635 B1**
(45) Date of publication and mention of the grant of the patent: **05.07.2017**
(21) Application number: 12712638.1
(22) Date of filing: 29.03.2012
(51) Int. Cl.: F03B 3/12, F03B 13/26, F03B 17/06, B29C 70/00

(54) **WATER-TURBINE BLADE AND AN ELONGATE SPAR THEREFOR**
WASSERTURBINENBLATT UND LÄNGLICHER HOLM DAFÜR
PALE DE TURBINE ENTRAINEE PAR L'EAU ET SON LONGERON

(30) Priority: 30.03.2011 GB 201105341; 12.12.2011 GB 201121278
(43) Date of publication of application: 05.02.2014
(73) Proprietor: Gurit (UK) Ltd., Newport Isle of Wight PO30 5WU (GB)
(72) Inventor: MCEWEN, Luke, Lymington Hampshire SO41 3SB (GB)
(74) Representative: Jenkins, Peter David
(86) International application number: PCT/EP2012/055687
(87) International publication number: WO 2012/130978

(56) References cited:
- WO-A1-00/66429
- WO-A2-2010/067082
- WO-A2-2011/015666
- GB-A- 2 467 226

## Description

The present invention relates to a water-turbine blade incorporating a spar and to a spar for a water-turbine blade, and in particular to a turbine blade for use in a tidal generator.

Devices for harnessing the kinetic energy of the tides are becoming more popular as costs fall and as the benefits of a predictable power output become clear against other "renewable" power sources such as wind turbines.

Typically the most popular tidal energy converters are axial-flow turbines, similar in concept to wind turbines but with shorter blades. Other designs of tidal turbine include cross-flow (Darius type) and oscillating foil generators. In each case the blades are shorter than on wind turbines because the higher density of water compared to air means the same power can be captured with a smaller rotor area.

Many current axial-flow tidal turbine designs resemble horizontal axis wind turbines (HAWTs) in their general configuration. Typically, two, three or four blades radiate outwardly from a central hub. Other designs use helical blades in a cross-flow configuration. In almost all cases there is a tendency for blades to be designed with relatively slender shapes for optimum hydrodynamic properties, typically to achieve high lift/drag ratios.

Compared to wind turbine blades, tidal turbine blades generate the same power with a smaller area, due to the higher density of the fluid (water for tidal turbines, versus air for wind turbines). For a similar thickness/chord ratio of the blade section, this means that bending moments and shear forces must be carried by a smaller cross-section. To avoid excessive stresses in the material, more of the blade cross-section must be filled with material. If the blade is made of metal, e.g. steel, it can become prohibitively heavy. If the blade is made of composite material, such a fibre reinforced resin composite material, this is not a problem from a weight perspective, because the blade is supported to a large extent by its buoyancy in the water. However, there is a challenge in fitting sufficient material into a small cross-section using a typical hollow spar designs as used on wind turbines. As well as high bending moments, tidal turbine blades see relatively high shear forces because those bending moments are developed over a shorter length than in a wind turbine blade.

If the loads are high enough, it may be necessary to make the spar solid for at least a part of its length. This raises challenges in manufacture, as both surfaces of the blade (suction side and pressure side) must be of fair shape; typically this is achieved by moulding the blade shell and/or spar in two halves. Joining the two halves of a solid spar results in high shear stresses at the joint, which may exceed the capacity of typical high-strength adhesives or biaxial secondary bonding laminate, particularly towards the tip where the blade is thinnest. Furthermore, because the spar is tapered in thickness along its length and of non-rectangular cross-section, the process of layering composite materials into moulds is time-consuming and difficult to automate for efficient production.

Finally at the inboard (root) end of the blade, it must be joined to the rest of the rotor. Achieving a strong and reliable connection which can withstand many years' fatigue loads and extreme loads under water is a challenge. If conventional known wind-turbine blade connections are used, such as T-bolts or bonded inserts to a pitch bearing or similar hub connection, the root end of the blade needs to be disproportionately large compared to the aerofoil part of the blade: for instance a 1MW wind turbine may have blades of approximately 30m length whereas a tidal turbine of similar power output will need blades of approximately only 10m length. All the other dimensions will scale roughly in the same proportion except the root diameter. Because the bending moments at the root of the tidal turbine blade are similar to those of the wind turbine blade, with similar joint design it will be necessary for both types of blade to have a root diameter of the order of 1.5m. The aerofoil section of the 1MW wind turbine blade might be almost 1m in thickness whereas the 1MW tidal turbine blade may be only about 0.3m thick at the start of the aerofoil section of the blade. Thus the tidal turbine requires a disproportionately steep transition from the (smaller) aerofoil section to the root section, to avoid a large part of the blade length being taken up by this transition region, which is thicker than the optimum aerofoil hence would cause excessive drag if it extended too far outboard. The problem with such a steep transition using hollow spar designs such as used on wind turbine blades is that the curvature of the faces of the spar generates Brazier loads that tend to deform the spar under load.

Tidal turbine blades tend to be made of fibre-reinforced plastic (FRP) laminate materials such as glass fibre/epoxy resin or carbon fibre/epoxy resin in order to be able to withstand high fatigue loads arising from turbulence in the flow, and the corrosive sub-sea environment. These conditions make other materials such as steel uneconomical, particularly given the difficulties of forming steel to the smooth but complex curved outside shape required for the lifting part of the blade.

Blades tend to be constructed from an outer shell, forming the hydrodynamic shape of the blade, and an inner spar which carries most of the loads into the rest of the turbine.

In some designs, the blades can pitch about their longitudinal axis (the radial axis of an axial-flow turbine rotor) to control power or to allow for the flow reversal with each tidal cycle. In other designs the pitch of the blades is fixed and the whole turbine rotates to face the flow, or the blades are designed to provide lift with flow in either direction.

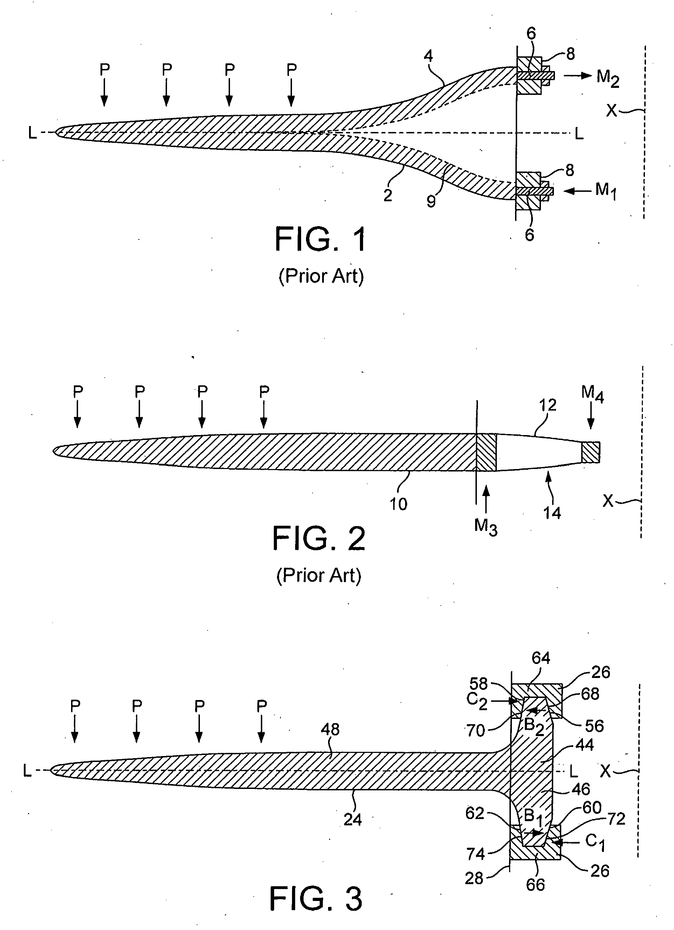

In many turbine rotors, the blades are attached at one end (the "root" end) to a central hub. In others, the blades are fixed at both ends i.e. they have two roots. In either case, the principal loads that need to be transferred from the root of the blade to the rest of the turbine are bending moments and shear forces. Bending moments can be carried by two opposing forces spaced apart by a distance; these are known as couple forces. In general, since the spacing of the couple forces is much less than the length of the blades, the couple forces tend to be much greater than the shear forces. Two known ways to attach the root ends of blades to turbines are:
1) As shown in Figure 1, to thicken the spar 2 gradually until it has sufficient width at a root end 4 for the bending moments under an applied load P to be carried by couple forces M₁, M₂ in the direction L-L along the blade. The spar may have a hollow cavity 9 to reduce weight. This is the construction most commonly used in large wind turbines. The couple forces are generally carried by bolts 6 loaded in tension and by abutment of the root end 4 of the blade against a part of the hub 8 for rotation about axis X.
2) As shown in Figure 2, to extend the spar 10 to provide an end portion 12 inside the turbine hub 14 such that the bending moments can be carried by couple forces M₃, M₄ in the direction transverse to the blade, as shown in Figure 2. This construction is commonly used for rudders on ships and is disclosed for use in a wind turbine in WO-A-2010/041012.

A problem with the first construction, since the spar is usually hollow and made with FRP materials, is that the length over which the blade thickens is a significant proportion of the total blade length. This is particularly so for tidal turbines as the blade is relatively shorter than a wind turbine blade yet carries similar bending moments, so needs to terminate in a similarly thick section. In this thickening part, the hydrodynamic performance of the blade is compromised due to the non-optimum thickness/chord ratio of the blade section. The designer's ability to shorten the transition from the outboard aerofoil sections to the inboard, thicker structural sections is limited by the ability of the hollow FRP spar to carry high loads around tight corners. Another problem with this method is that the loads must be transferred from the FRP material into the turbine hub; the attachment of bolts to the FRP typically requires very thick laminates to be built up, which are expensive and time-consuming to make.

The problem with the second construction is that it uses up space inside the rotor hub that may be necessary for other parts of the turbine. For instance in some designs the generator is housed inside the rotor; in others access is required into this space for maintenance so the intrusion of the root ends of the blades is inconvenient and requires compromises on the mechanical design of the hub.

Attempts have been made by various companies to manufacture blades for 1 MW tidal turbines. Currently, to the knowledge of the Applicant, none of these have been successful. So there is a need for an economically viable method of making blades for tidal turbines that are strong enough to work at the megawatt scale, are efficient in hydrodynamic performance and cost effective to manufacture.

The present invention aims at least partially to meet that need.

GB-A-2467226 discloses a composite rotor blade with an integral composite flange portion which is annular.

Accordingly, the present invention provides a water-driven turbine according to claim 1, claim 2 or claim 3.

The present invention further provides an elongate spar of a turbine according to claim 10 or claim 11.

Preferred features are defined in the dependent claims.

Preferred embodiments of the present invention provide a tidal turbine blade whose spar is made up of cured plies arranged in a plane approximately perpendicular to the aerofoil chord line or blade surface, i.e. in a plane parallel to the primary lift force on the blade.

The invention relates to the attachment of the spar to the rest of the turbine, typically to a central hub of the rotor in the case of an axial-flow turbine.

The invention is applicable to both pitching and non-pitching designs, but particularly to non-pitching as the end of the blade spar is typically not circular in cross-section in the present invention.

In this specification, the turbine blades incorporating the spars of the present invention may be used in any type of turbine which generates electrical power from flow of water relative to the turbine blade, which causes motion of the turbine blade which in turn drives an electrical generator, either directly or via a gearbox or hydraulic pump. Depending upon the turbine design, the turbine is most typically disposed in the sea, but may be disposed in a river, or even a lake or other body of moving water. Most typically, the turbine is a tidal turbine which is adapted to cause electrical power generation from tidal motion, either on a rising sea tide or a reverse falling sea tide, with the turbine moving by water flow relative thereto in either of two opposite directions.

The turbine is typically an axial flow turbine, in which plural radial turbine blades are fixed to a rotatable hub which is caused to rotate about an axis by water movement over the turbine blade surfaces. Alternatively, the turbine is a cross flow turbine, in which the turbine blades are fixed to a support and are caused to rotate, for example in an oscillating motion, about a longitudinal axis of the turbine blade by water movement over the turbine blade surfaces, the turbine blade therefore acting similar to an aerofoil. However, the turbine into which the spar of the present invention may be incorporated may have any configuration adapted for use with moving water providing the driving force for motion of the turbine in order to generate electrical power.

In particular, the preferred embodiments of the present invention relate to a tidal turbine blade spar in which cured plies of composite material in the spar are arranged substantially perpendicular to the aerofoil chord line, instead of being substantially parallel to it, as used in the prior art. That is to say the plies are arranged in the plane of the main lift force on the blade, so that off-axis fibres in those plies can carry the primary shear forces better. The orientation of the plies circumvents the problems of achieving sufficient shear strength and of laborious laminating of a spar, and also carries efficiently the Brazier loads in the root transition part of the blade. The present invention has particular application to blades in which the spar must be solid or substantially solid to achieve sufficient strength. However, the present invention also has application to blades incorporating more lightly-loaded spars if the benefits in manufacturing efficiency outweigh any increase in material usage.

Embodiments of the present invention will now be described by way of example only with reference to the accompanying drawings, in which:
Figure 1 is a schematic longitudinal cross-section through a first known spar of a wind turbine blade;
Figure 2 is a schematic longitudinal cross-section through a second known spar of a wind turbine blade;
Figure 3 is a schematic longitudinal cross-section through a spar of a tidal turbine blade and an attachment mechanism at a root end of the spar in accordance with a first embodiment of the present invention;
Figure 4 is a schematic perspective view of the root end of the spar of Figure 3;
Figure 5 is a schematic end view of a tidal turbine blade incorporating a modified spar of Figure 3;
Figure 6 is a schematic perspective view of the root end of a modified spar of Figure 3 showing forces acting on the spar;
Figure 7 is a schematic plan view of a modified spar of Figure 3 showing forces acting on the spar;
Figure 8 is a schematic longitudinal cross-section through a tidal turbine hub having opposed spars of respective tidal turbine blades mounted thereon by respective attachment mechanisms at a root end of the spar in accordance with a second embodiment of the present invention;
Figure 9 is a schematic perspective view of a root end of a spar in accordance with a fifth embodiment of the present invention;
Figure 10 is a schematic perspective view of a spar for a tidal turbine blade in accordance with a sixth embodiment of the present invention; and
Figure 11 a schematic side view of the spar of Figure 10 during manufacture when laid up on a mould surface.

Referring to Figures 3, 4, 5, 6 and 7 there is shown part of a water-driven turbine in accordance with a first embodiment of the present invention. The water-driven turbine is a tidal turbine.

The tidal turbine 20 includes plural turbine blades 22, each including an elongate load-carrying spar 24 fitted by a fitting 26 to a turbine member 28 in the form of a rotational hub having a rotational axis X. One spar 24 is shown, although plural turbine blades 22, each having a respective spar 24, are fitted around the turbine member 28.

The spar 24 is composed of fibre reinforced resin composite material. The spar 24 is formed as a solid body of parallel laminated sheets 30 of fibre-reinforced resin composite material. Each sheet 30 may comprise a plurality of stacked plies (not shown) of the fibre-reinforced resin composite material produced from prepreg or resin-infused plies.

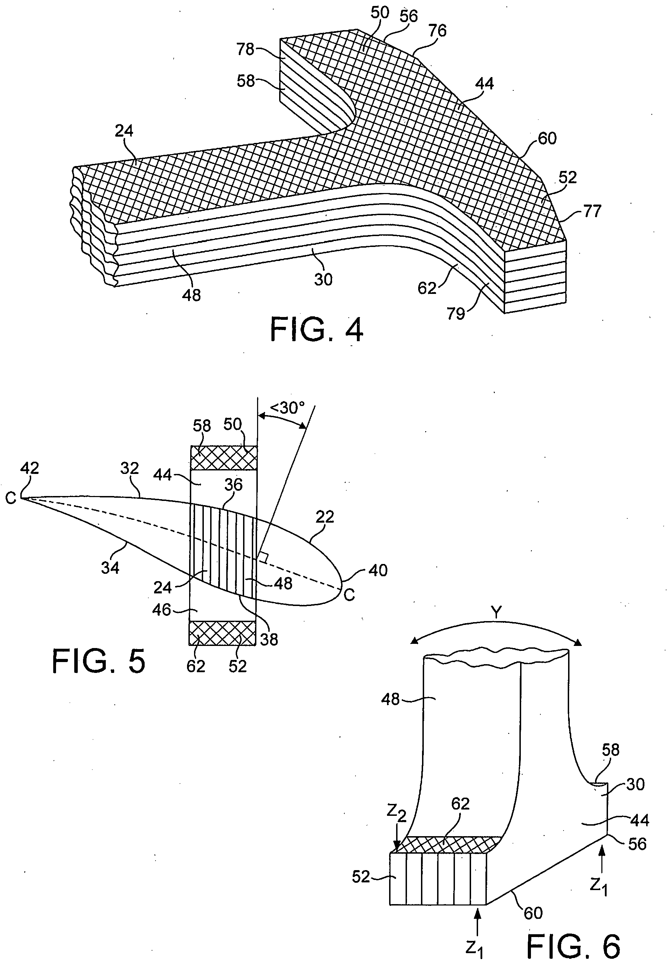

As shown in Figure 5, first and second turbine blade portions 32, 34 define opposite respective load bearing blade surfaces, are affixed to opposed sides 36, 38 of the spar 24 and are joined together at a leading edge 40 and at a trailing edge 42 of the blade 22. The sheets 30 of the stack lie in a plane extending between the first and second turbine blade portions 32, 34. The opposed edges of the stack are attached to opposed inner faces of the first and second turbine blade portions 32, 34. Typically, the sheets 30 of the stack lie in a plane extending substantially orthogonally, or at an acute angle of, for example, 30 degrees as illustrated in Figure 5, to a chordal direction C - C of the turbine blade 22.

In this embodiment, the water-driven turbine is an axial flow turbine including plural radial turbine blades 22 fixed to a rotatable hub 28 which is caused to rotate about axis X by water movement over the turbine blade surfaces.

The spar 24 comprises a root mounting portion 44 which mounts an end 46 of the spar 24 to the turbine member 28 and an elongate blade supporting portion 48 extending longitudinally away from the root mounting portion 44. The root mounting portion 44 includes a pair of outwardly tapered flange portions 50, 52 extending transversely outwardly on respective opposite transverse sides of the spar 24. Each flange portion 50, 52 has a respective pair of opposite transversely extending mounting surfaces 56, 58; 60, 62 which are longitudinally mutually spaced and form a taper reducing the width of the flange portion 50, 52 in the outward transverse direction. In this embodiment the spar 24 is planar and substantially T-shaped.

The fibre reinforced resin composite material includes a substantially planar stack of fibrous sheets 30 laminated together, the sheets 30 extending in a longitudinal direction of the spar 24. The elongate blade supporting portion 48 includes unidirectional fibres aligned at an angle of no more than +/- 20 degrees to, or substantially aligned along, the longitudinal axis L of the elongate blade supporting portion 48. The mounting portion 44 includes fibres inclined to the longitudinal axis L. Each sheet 30 may comprise a plurality of laminated fibrous plies, at least some of the plies having unidirectional fibres and at least some of the plies having multiaxial, for example biaxial, fibres. Typically, at least one of the sheets 30 may comprise a first fibre material and/or a first fibre orientation at the mounting portion 44 and a second fibre material and/or a second fibre orientation at the elongate blade supporting portion 48.

The sheets 30 extend in the longitudinal direction of the spar 24, along the blade axis, substantially from the root to the tip. The sheets 30 therefore extend substantially transverse to the chordal direction C-C shown in Figure 5. Accordingly, the sheets 30 each substantially lie in a plane of maximum load for the tidal turbine blade 22.

A relatively large proportion, typically around 60-90%, of the plies in each sheet 30 comprise longitudinally oriented unidirectional fibres, extending substantially along the blade axis, which resist any bending moments acting transversely to the blade length. A relatively small proportion, typically the remainder, of the plies in each sheet 30 comprises a biaxial fabric having fibres aligned at +/-45 degrees to the blade axis. These biaxial sheets carry shear forces. The biaxial plies carrying the shear forces are interleaved with the unidirectional plies carrying bending moment. The sheets 30 are individually fabricated from plural plies and then cured. Then the cured sheets 30 are bonded together to form the cross-section of the spar 24. The resins present in the plural plies laid-up within each sheet 30 are all co-cured together to form a single integral fibre-reinforced resin matrix within the respective sheet 30.

Accordingly, there is sufficient inter-ply bond strength within each sheet 30 to transfer the shear loads from the unidirectional fibres to the biaxial fibres.

In a modified embodiment, rather than comprising both unidirectional plies and biaxial plies which are interleaved together, the plies in each sheet 30 comprise a triaxial fabric having fibres aligned at 0, +45 and - 45 degrees to the blade axis.

In another modified embodiment, the plies in each sheet 30 comprise unidirectional plies having fibres aligned at 0, +45 and - 45 degrees to the blade axis.

Further embodiments may use multiaxial fabrics or unidirectional plies with fibres in other combinations of directions that give the spar sufficient shear and axial strength, such as fibres oriented at +10 and -10 degrees to the blade axis.

In the illustrated embodiment the spar 24 consists only of the sheets 30. However, in other embodiments the spar 24 may include additional layers sandwiched between one or more pairs of adjacent fibre reinforced resin sheets 30, for example a layer of resin or polymeric material, or a film of thermoplastic material, which does not include fibres. Such additional layers may be incorporated into any of the embodiments of the invention.

The fitting 26 fits the flange portions 50, 52 to the turbine member 28. The fitting 26 includes a pair of fitting portions 64, 66. Each fitting portion 64, 66 has a respective pair of opposite transversely extending bearing surfaces 68, 70; 72, 74 which respectively engage the mounting surfaces 56, 58; 60, 62 of a respective flange portion 50, 52. In this embodiment the spar 24 is planar and the flange portions 50, 52 are in the plane of the spar 24. In addition, the fitting portions 64, 66 are mutually separated and independent.

In an alternative embodiment, the fitting portions 64, 66 are integral in a common fitting 26, for example the common fitting 26 being annular and engaging plural flange portions 50, 52 of the spar 24.

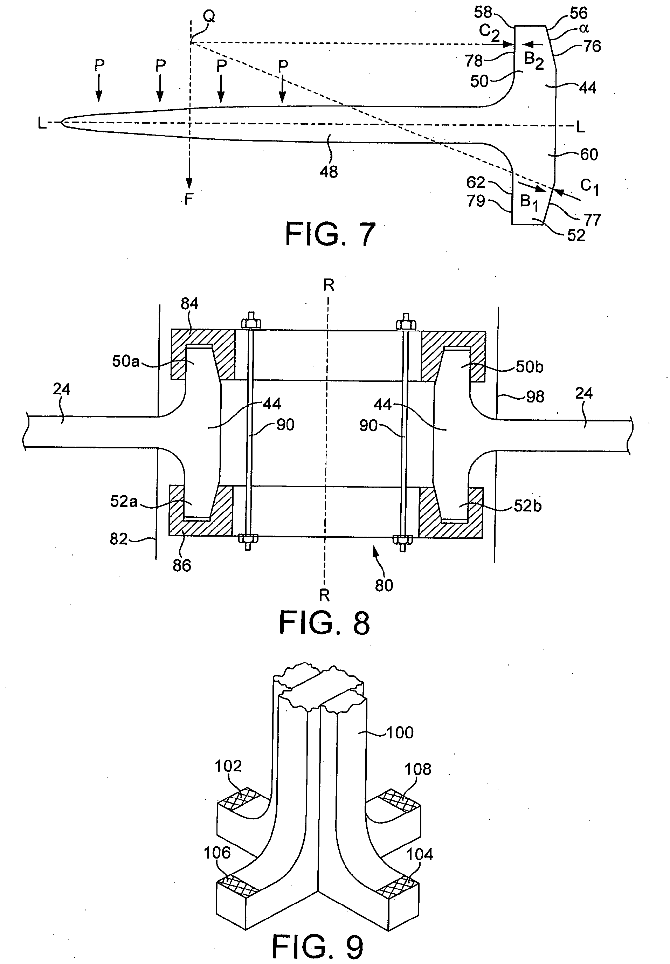

The opposite transversely extending mounting surfaces 56, 58; 60, 62 of each flange portion 50, 52 include a respective first end surface 76, 77 (radially inner when the blade is fitted to the hub 28) and a respective second intermediate surface 78, 79 (radially outer when the blade is fitted to the hub 28). The first end surface 76, 77 is inclined at an acute angle, typically greater than 45 degrees and less than 90 degrees, to a longitudinal axis L of the elongate blade supporting portion 48. The second intermediate surface 78, 79 is orthogonal to the longitudinal axis L as illustrated in Figures 6 and 7, or alternatively as illustrated in Figures 3 and 4 the second inner surface 78, 79 is inclined at an obtuse angle, typically greater than 90 degrees and less than 135 degrees, to the longitudinal axis L. This provides a tapering structure to the transverse flange portions 50, 52 of the root end 46 of the spar 24.

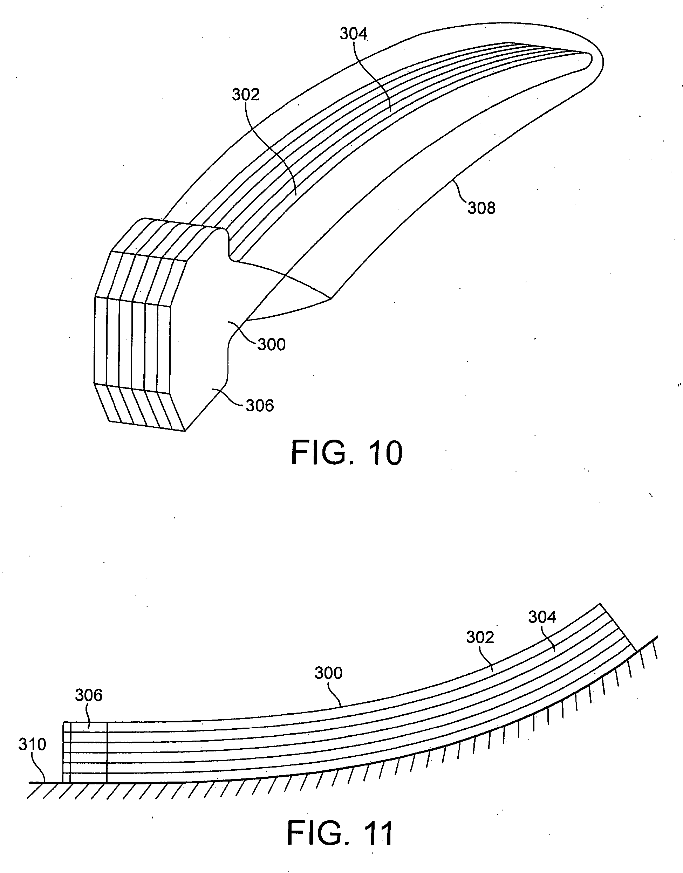

Referring to Figures 10 and 11, there is shown a spar for a tidal turbine blade in accordance with a further embodiment of the present invention. In this embodiment the spar 300 has some curvature along all or a portion of its length, the curvature being achieved by curving the individual plies 302 of the stack 304 forming the spar 300. The curvature is about one or more axes in the plane of the plies 302 and the spar 300. The stack 304 is therefore substantially planar, but with some curvature. The curvature may be about a single common axis, for example an axis parallel to the plane of a T-shaped mounting portion 306 at one end of the stack 304. This provides, as shown in the Figures 10 and 11, curvature in the plies 302 and the resultant stack 304 which is within the plane of the plies 302 and the stack 304.

Alternatively, the curvature may be about more than one axis, for example to form a twisted configuration which is additionally curved about an axis extending generally along the longitudinal direction of the spar 300.

Figure 10 shows a correspondingly curved blade shell 308 fitted to the curved spar 300.

This embodiment provides the additional advantage that it is easier to manufacture a curved spar 300 by bending the plies 302 about an axis out of the plane of the plies 302, rather than about an axis within the plane of the plies 302. During the manufacturing process, the plies 302 may be sequentially laid up on a curved mould surface 310, as shown in Figure 11, each ply 302 being individually curved or bent upon being laid up into the stack 304.

The incorporation of a curved spar into a tidal turbine blade provides the advantage that the bend-twist coupling of the spar to the hub reduces the load on the spar.

In any of the embodiments of the present invention, the sheets may be formed of pultruded sheets, optionally flat, but which may incorporate some curvature for example as shown in Figures 10 and 11.

In an alternative embodiment as shown in Figure 8, a plurality of the spars 24 is fitted around a rotatable hub 80 of the turbine member 82, and a pair of the fittings 84, 86 is provided, the fittings 84, 86 being separated in a direction along a rotational axis R of the hub 80. Each fitting 84, 86 is fitted to flange portions 50a, 50b; 52a, 52b on a respective one of two opposite sides of the spars 24. Typically, each fitting 84, 86 is annular. In Figure 8 the hub 80 is shown encased in a hydrodynamic fairing 98 which covers the root attachment of the blades.

Accordingly, in these various embodiments of the invention, the root end 46 of the spar 24 of the turbine blade 22, where the spar 24 attaches to the rest of the turbine, is formed in a T-shape, and the transverse ends of the T-shape, formed by the flange portions 50, 52, are clamped to the turbine by opposed contact surfaces of the fitting portions 64, 66; 84, 86.

Such a mounting structure provides the important advantage that the blade can be kept to a hydrodynamically-efficient shape for most of its length, without intruding too far into the rotor hub 28; 80. The laterally broad transversely extending T-shaped root mounting portion 44 can be minimised in the longitudinal dimension as a proportion of the entire blade length and consequently the laterally narrow longitudinally extending elongate blade supporting portion 48 can be maximised in the longitudinal dimension as a proportion of the entire blade length, which increases the overall hydrodynamic efficiency of the spar and the blade.

In the illustrated embodiments of the present invention, the spar 24 is formed in a "T" shape at its root end 46, such that a portion of the spar 24 runs transverse to the rest of the spar 24 and approximately parallel to the main direction of loading on the blade 22. The applied pressure loading on the blade surface, indicated in Figures 3 and 7 by arrows P, generates bending moments, indicated by arrows B₁, B₂, at the root end 46. The bending moments B₁, B₂ can then be taken by couple forces C₁, C₂ applied by the fitting 26 acting close to the ends of this transverse portion, as shown in Figures 3 and 7.

The principal forces acting on the root end do so by contact of the transversely extending mounting surfaces 56, 58; 60, 62 of the flange portions 50, 52 with two pairs of opposed bearing surfaces 68, 70; 72, 74, one pair at each end of the T-shape. This structure provides that bending moments in either load direction on the blade can be carried, and the couple forces required to carry the bending moments are kept within reasonable limits by the transverse spacing apart of the ends of the T-shape.

Any slack in the attachment can be removed by pre-compressing the bearing surfaces 68, 70; 72, 74 within each pair against the mounting surfaces 56, 58; 60, 62. The stresses induced in the structure due to this pre-compression are carried only a short distance by virtue of the fact that the opposed bearing surfaces 68, 70; 72, 74 and mounting surfaces 56, 58; 60, 62 within each pair are longitudinally close together, even though the pairs are transversely spaced apart on opposite sides of the spar 24.

In the illustrated embodiment, the fitting portions 64, 66 carry the couple forces C₁, C₂ into the rest of the turbine hub 28. The fitting portions 64, 66 may each comprise a C-section clamp, for example of steel, and each transverse end of the T-shape blade root is gripped within the central cavity of the C-section. The fitting portions 64, 66 are attached to, or form part of, the rotor hub structure.

By tapering the mounting surfaces 56, 58; 60, 62 of the flange portions 50, 52 of the blade root 46 and the complementary internal bearing surfaces 68, 70; 72, 74 of the clamp fitting portions 64, 66, the attachment can be pre-loaded by pulling the clamp fitting portions 64, 66 at each end of the T-shape laterally inwardly and towards each other, for instance using elongate clamping bolts 90 as shown in Figure 8. This avoids the need for any load-bearing tightening mechanism to be introduced within the clamp fitting itself.

In a preferred embodiment, the tapered mounting surfaces 56, 58; 60, 62 are angled as shown in Figure 7, i.e. with the second intermediate surface 78, 79 (the radially outboard surface) substantially perpendicular to the blade axis L and the first end surface 76, 77 (the radially inboard surface) at an acute angle α to the perpendicular to the blade axis L. Accordingly, the resulting couple forces C₁ and C₂ acting perpendicular to the contact surfaces, namely the bearing surfaces 68, 70; 72, 74, have a net component perpendicular to the blade, which opposes the applied lift force F on the blade. By allowing the forces acting at the contact surfaces to have a component which is substantially perpendicular to the blade surfaces, the requirement for friction to prevent sliding is reduced. In Figure 7 couple force C₁ has a component acting opposite to the lift force F which reduces the net force acting perpendicular to the blade axis L which otherwise would tend to slide the blade root 46 within the fitting along that perpendicular direction. This reduces the requirement for substantial pre-loading of the contact surfaces. Ideally the line of action of the contact forces C₁ and C₂ and the net lift force F on the blade should meet at a point Q as shown in Figure 7, to minimise the friction forces required.

Furthermore, for an axial flow turbine with blades radiating out from a central hub, the clamps can be arranged to form an annular array of clamps linking the roots of all the blades together, as shown in Figure 8. By this construction, the annular clamping array carries most of the blade bending loads, leaving only net loads due to differences in loading between one blade and another to be carried by the rest of the hub structure.

The T-shaped spar root construction is well suited to FRP materials since the couple forces can act over a large enough area at the ends of the T-shape to avoid high local compressive stresses in the FRP material. The T-shape can provide sufficient strength to the FRP spar material at the concave corners of the T-shape. At these locations, high radial stresses (Brazier loads) can be generated by the bending moment in the spar. These radial stresses increase with decreasing corner radius so the tightness of those corners is limited by the ability of the material to withstand the radial stresses. In isotropic materials such as steel, the radial stresses are readily carried so the radius can be small, considerably less than the thickness of the spar at that point. However in materials such as FRP that are weaker in directions perpendicular to the fibres than along the fibres, the radius may need to be larger.

The preferred embodiment of the invention therefore incorporates plies of material laid in the plane of the T-shape, as shown in Figure 4. With fibres at a variety of angles in these plies, as shown in Figure 4, the radial stresses can be carried around the corners.

The spar 24 may be hollow but more typically the spar 24 is substantially solid, so that the angled fibres of Figure 4 can transfer load right across and through the thickness of the spar. Thus the spar incorporated into the turbine of the invention is not merely an evolution of the known thickening hollow FRP spar as shown in Figure 1, but a step change in approach so that the spar dimension is minimised right up to the root, allowing the spar to be made solid, and hence carry high stresses, without excessive volumes of material being needed.

The loads on a tidal or wind turbine blade are typically expressed as flapwise and edgewise, i.e. with reference to the chord direction of the aerofoil. Since the T-shaped root is able to transfer much larger loads in the plane of the T-shape than in the perpendicular direction, it is best to align the plane of the T to the largest loads. Typically the loading is primarily flapwise, which means orienting the plane of the T-shape substantially perpendicular to the blade chord, e.g. within 30 degrees of perpendicular, as shown in the cross-section through the blade shown in Figure 5. In Figure 5 the spar 24 and blade outline are shown in cross section and the flange portions 50, 52 of the T-shape are shown protruding in the background with the contact areas of mounting surfaces 56, 58; 60, 62 cross-hatched. The optimum angle of the plane of the T-shape to the aerofoil chord near the root would depend on the ratio of flapwise to edgewise loads and the twist on the blade, which varies the angle of the chord line along the length of the blade.

As shown in Figure 6, bending moments out of the plane of the T-shape, indicated by arrow Y, can also be carried by the flange portions 50, 52, by couple forces Z₁ and Z₂ acting on opposite edges of the mounting surfaces 56, 58; 60, 62 as shown in Figure 6. Since these couple forces Z₁ and Z₂ are likely to be closer together than the couple forces C₁ and C₂ resisting in-plane bending moments, the ability of the blade root to withstand bending moments in the out-of-plane direction is less than for in-plane moments. In a modification of the invention, the spar has a cross-section in cross or cruciform shape i.e. two superposed T-shapes as shown in Figure 9. In the alternative embodiment as shown in Figure 9, the spar 100 has a cross-section in the form of a cross and has two pairs of flange portions 102, 104; 106, 108, each pair being aligned along a respective one of two orthogonal planes of the cross. The fitting (not shown) correspondingly includes two pairs of fitting portions, each pair of fitting portions being fitted to a respective pair of flange portions 102, 104; 106, 108. For tidal turbines however, the majority of loading tends to be in a single plane so it is unlikely that most turbines would require such a cruciform construction.

On many tidal turbine designs the primary loads are oriented almost in the direction of the water flow, i.e. the axial direction of the rotor. Thus for practical reasons it may be advantageous simply to align the plane of the T-shape with the axial direction; this could simplify the assembly and alignment of the blades onto the turbine. Such a rotor would have advantages over other known designs such as that shown in Figure 1 in that the blades could be fitted or replaced very quickly. In the marine environment where tidal turbines are installed, the costs of vessels for installation and maintenance are relatively very high, which means that saving time during operations on board can confer a large financial benefit.

In alternative embodiments, the water-driven turbine is a cross flow turbine including the turbine blade fixed to a support for rotation substantially about a longitudinal axis of the turbine blade by water movement over the turbine blade surfaces.

In the illustrated embodiment of the water-driven turbine blade, the opposed edges of the stack are attached to opposed inner faces of the first and second surfaces. However, in alternative embodiments, the opposed edges of the stack each form a respective part of the first and second surfaces, and may be shaped accordingly.

The present invention has application in the manufacture of oscillating foil tidal turbine blades, cross-flow tidal turbine blades and axial flow tidal turbine blades, because all of these blade types have very high loading and relatively thin blade sections and their root connections can generate high shear loads.

Since the shape of the sheets is simple, flat or nearly flat, and typically rectangular, off-axis plies can be easily made from collimated prepreg rather than stitched biaxial layers. Collimated prepreg is stronger and cheaper than stitched fabric because it avoids the stress concentrations and process costs of the stitching operation.

Furthermore, since the plies are aligned in the plane of the maximum load direction, the spar carries shear forces through fibres rather than just resin or adhesive. Accordingly, the spar according to the preferred embodiments of the invention can withstand much higher shear forces than even a solid laminated spar consisting of plies laminated in the span-chord plane.

The spar according to the preferred embodiments of the invention is suited to carrying Brazier loads caused by steep changes of shape typically seen at the transition between the root and the aerofoil section of a tidal turbine blade. This means that the transition can be steeper than would be the case with a conventional wind-turbine-style design, allowing the aerofoil section to be extended further inboard towards the root section. The result is a tidal turbine blade which is capable of generating more power from the same blade length.

Integrated root connection solutions are easily incorporated during the spar lay-up process, eliminating the extra step of drilling holes for T-bolts or bonded inserts after fabricating the blade.

The cost of maintenance and repair of submerged tidal turbines is high, for example much greater than for onshore wind turbines. The preferred embodiments of the present invention provide an advantage that the constructions can eliminate the use of highly-loaded adhesive joints in an underwater environment, which enhances the reliability of the tidal turbine incorporating the tidal turbine blade. The preferred embodiments of the present invention can also provide significant labour cost savings, efficiency and reliability improvements compared to other methods, particularly for an axial-flow turbine construction.

Within the scope of the appended claims, various other modifications to the tidal turbine blades of the present invention, and their manufacturing process, will be apparent to those skilled in the art.

## Claims

1. A water-driven turbine including an elongate spar (24) of a turbine blade (22) fitted to a turbine member (28), the spar (24) being composed of fibre reinforced resin composite material, the spar comprising a root mounting portion (44) which mounts an end (46) of the spar (24) to the turbine member (28) and at least one elongate blade supporting portion (48) extending longitudinally away from the root mounting portion (44), the root mounting portion (44) including a pair of flange portions (50,52) extending transversely outwardly on respective opposite transverse sides of the spar (24), each flange portion (50,52) having opposite transversely extending mounting surfaces (56,58;60,62) which are longitudinally mutually spaced, and a fitting (26) which fits the flange portions (50,52) to the turbine member (28), the fitting (26) including a pair of fitting portions (64,66), each fitting portion (64,66) having opposite transversely extending bearing surfaces (68,70;72,74) which respectively engage the mounting surfaces (56,58;60,62) of a respective flange portion (50,52), wherein the spar (24) is planar and the flange portions (50,52) are in the plane of the spar (24).

2. A water-driven turbine including an elongate spar (24) of a turbine blade (22) fitted to a turbine member (28), the spar (24) being composed of fibre reinforced resin composite material, the spar comprising a root mounting portion (44) which mounts an end (46) of the spar (24) to the turbine member (28) and at least one elongate blade supporting portion (48) extending longitudinally away from the root mounting portion (44), the root mounting portion (44) including a pair of flange portions (50,52) extending transversely outwardly on respective opposite transverse sides of the spar (24), each flange portion (50,52) having opposite transversely extending mounting surfaces (56,58;60,62) which are longitudinally mutually spaced, and a fitting (26) which fits the flange portions (50,52) to the turbine member (28), the fitting (26) including a pair of fitting portions (64,66), each fitting portion (64,66) having opposite transversely extending bearing surfaces (68,70;72,74) which respectively engage the mounting surfaces (56,58;60,62) of a respective flange portion (50,52), wherein the spar (24) is planar and substantially T-shaped.

3. A water-driven turbine including an elongate spar (24) of a turbine blade (22) fitted to a turbine member (28), the spar (24) being composed of fibre reinforced resin composite material, the spar comprising a root mounting portion (44) which mounts an end (46) of the spar (24) to the turbine member (28) and at least one elongate blade supporting portion (48) extending longitudinally away from the root mounting portion (44), the root mounting portion (44) including a pair of flange portions (50,52) extending transversely outwardly on respective opposite transverse sides of the spar (24), each flange portion (50,52) having opposite transversely extending mounting surfaces (56,58;60,62) which are longitudinally mutually spaced, and a fitting (26) which fits the flange portions (50,52) to the turbine member (28), the fitting (26) including a pair of fitting portions (64,66), each fitting portion (64,66) having opposite transversely extending bearing surfaces (68,70;72,74) which respectively engage the mounting surfaces (56,58;60,62) of a respective flange portion (50,52), wherein the spar (300) has a cross-section in the form of a cross and has two pairs of flange portions (302,304;306,308), each pair being aligned along a respective one of two orthogonal planes of the cross, and the fitting includes two pairs of fitting portions, each pair of fitting portions being fitted to a respective pair of flange portions (302,304;306,308).

4. A water-driven turbine according to any preceding claim wherein a plurality of the spars (24) is fitted around a rotatable hub (80) of the turbine member (82), and a pair of the fittings (84,86) is provided, the fittings (84,86) being separated in a direction along a rotational axis of the hub (80) and each fitting (84,86) being fitted to flange portions (50a,50b;52a,52b) on a respective one of two opposite sides of the spars (24), optionally wherein each fitting (84,86) is annular.

5. A water-driven turbine according to any preceding claim wherein the opposite transversely extending mounting surfaces (56,58;60,62) of each flange portion (50,52) includes a first end surface (76,77) and a second intermediate surface (78,79), the first end surface (76,77) being inclined at an acute angle to a longitudinal axis of the elongate blade supporting portion (48) to form an outwardly tapered flange portion (50,52), optionally wherein (i) the first end surface (76,77) is inclined at an acute angle of from greater than 45 degrees to less than 90 degrees relative to the longitudinal axis of the elongate blade supporting portion (48), and/or (ii) (a) the second intermediate surface (78,79) is orthogonal to the longitudinal axis of the elongate blade supporting portion (48), or (b) wherein the second intermediate surface (78,79) is inclined at an obtuse angle to the longitudinal axis of the elongate blade supporting portion (48), the second intermediate surface (78,79) being inclined optionally at an obtuse angle of from greater than 90 degrees to less than 135 degrees relative to the longitudinal axis of the elongate blade supporting portion (48).

6. A water-driven turbine according to any one of claims 1 to 5, wherein the fibre reinforced resin composite material includes a substantially planar stack of fibrous sheets (36) laminated together, the sheets (30) extending in a longitudinal direction of the spar (24), optionally wherein (i) the elongate blade supporting portion (48) includes unidirectional fibres aligned at an angle of no more than +/- 20 degrees to a longitudinal axis of the elongate blade supporting portion (48), or (ii) the elongate blade supporting portion (48) includes unidirectional fibres substantially aligned along a longitudinal axis of the elongate blade supporting portion (48), further optionally wherein the mounting portion (44) includes fibres inclined to the longitudinal axis.

7. A water-driven turbine according to claim 6, wherein at least one of the sheets (30) comprises a first fibre material at the mounting portion (44) and a second fibre material at the elongate blade supporting portion (48), and/or wherein at least one of the sheets (30) comprises a first fibre orientation at the mounting portion (44) and a second fibre orientation at the elongate blade supporting portion (48).

8. A water-driven turbine according to any foregoing claim, further comprising opposite first and second turbine blade portions (32,34), each defining a respective load bearing blade surface, and the spar (24) being located between the first and second turbine blade portions (32,34), wherein the fibre reinforced resin composite material includes a substantially planar stack of fibrous sheets (30) laminated together, the sheets (30) extending in a longitudinal direction of the spar (24) and the sheets (30) of the stack lie in a plane extending between the first and second turbine blade portions (32,34), optionally wherein (a) the opposed edges of the stack are attached to opposed inner faces of the first and second turbine blade portions (32,34), and/or (b) the sheets (30) of the stack lie in a plane extending substantially orthogonally to a chordal direction of the turbine blade (22).

9. A water-driven turbine according to any foregoing claim, which is an axial flow turbine including plural radial turbine blades (22) fixed to a rotatable hub (28) which is caused to rotate about an axis by water movement over the turbine blade surfaces, or which is a cross flow turbine including the turbine blade fixed to a support for rotation substantially about a longitudinal axis of the turbine blade by water movement over the turbine blade surfaces.

10. An elongate spar (24) of a turbine blade (22) for a water-driven turbine, the spar (24) being composed of fibre reinforced resin composite material, the spar (24) comprising a root mounting portion (44) adapted to mount an end (46) of the spar (24) to the turbine member (28) and at least one elongate blade supporting portion (48) extending longitudinally away from the root mounting portion (44), the root mounting portion (44) including a pair of outwardly tapered flange portions (50,52) extending transversely outwardly on respective opposite transverse sides of the spar (24), each flange portion (50,52) having opposite transversely extending mounting surfaces (56,58;60,62) which are longitudinally mutually spaced and form a taper wherein the spar (24) is planar and the flange portions (50,52) are in the plane of the spar (24).

11. An elongate spar (24) of a turbine blade (22) for a water-driven turbine, the spar (24) being composed of fibre reinforced resin composite material, the spar (24) comprising a root mounting portion (44) adapted to mount an end (46) of the spar (24) to the turbine member (28) and at least one elongate blade supporting portion (48) extending longitudinally away from the root mounting portion (44), the root mounting portion (44) including a pair of outwardly tapered flange portions (50,52) extending transversely outwardly on respective opposite transverse sides of the spar (24), each flange portion (50,52) having opposite transversely extending mounting surfaces (56,58;60,62) which are longitudinally mutually spaced and form a taper wherein the spar (300) has a cross-section in the form of a cross and has two pairs of flange portions (302,304;306,308), each pair being aligned along a respective one of two orthogonal planes of the cross, and the fitting includes two pairs of fitting portions, each pair of fitting portions being fitted to a respective pair of flange portions (302,304;306,308).

12. An elongate spar according to claim 10 or claim 11, wherein the opposite transversely extending mounting surfaces (56,58;60,62) of each flange portion (50,52) includes a first end surface (76,77) and a second intermediate surface (78,79), the first end surface (76,77) being inclined at an acute angle to a longitudinal axis of the elongate blade supporting portion (48), wherein the first end surface (76,77) is inclined at an acute angle of from greater than 45 degrees to less than 90 degrees relative to the longitudinal axis of the elongate blade supporting portion (48), and optionally wherein (i) the second intermediate surface (78,79) is orthogonal to the longitudinal axis of the elongate blade supporting portion (48), or (ii) the second intermediate surface (78,79) is inclined at an obtuse angle to the longitudinal axis of the elongate blade supporting portion (48), the second intermediate surface (78,79) being inclined optionally at an obtuse angle of from greater than 90 degrees to less than 135 degrees relative to the longitudinal axis of the elongate blade supporting portion (48).

13. An elongate spar (24) according to any one of claims 10 to 12, wherein the fibre reinforced resin composite material includes a substantially planar stack of fibrous sheets (70) laminated together, the sheets (30) extending in a longitudinal direction of the spar (24), optionally (i) wherein the spar (300) is curved, the substantially planar sheets (30) having a curvature about at least one axis in the plane of the sheets (30), and/or (ii) wherein the first sheets comprise pultruded sheets.

14. An elongate spar (24) according to claim 13, wherein the elongate blade supporting portion (48) includes unidirectional fibres aligned at an angle of no more than +/- 20 degrees to a longitudinal axis of the elongate blade supporting portion (48), or wherein the elongate blade supporting portion (48) includes unidirectional fibres substantially aligned along a longitudinal axis of the elongate blade supporting portion (48), optionally wherein the mounting portion (44) includes fibres inclined to the longitudinal axis, and/or each sheet (30) comprises a plurality of laminated fibrous plies, at least some of the plies further optionally having unidirectional fibres and at least some of the plies have multiaxial fibres.

15. An elongate spar according to claim 13 or claim 14, wherein at least one of the sheets (30) comprises a first fibre material at the mounting portion (44) and a second fibre material at the elongate blade supporting portion (48), and/or wherein at least one of the sheets (30) comprises a first fibre orientation at the mounting portion (44) and a second fibre orientation at the elongate blade supporting portion (48).

16. A water-turbine blade including an elongate spar (24) according to any one of claims 11 to 15, the blade comprising opposite first and second turbine blade portions (32,34), each defining a respective load bearing blade surface, and the spar (24) being located between the first and second turbine blade portions (32,34), optionally wherein the fibre reinforced resin composite material includes a substantially planar stack of fibrous sheets (30) laminated together, the sheets (30) extending in a longitudinal direction of the spar (24) and the sheets (30) of the stack lie in a plane extending between the first and second turbine blade portions (32,34), further optionally wherein (i) the opposed edges of the stack are attached to opposed inner faces of the first and second turbine blade portions (32,34), and/or (ii) the sheets (30) of the stack lie in a plane extending substantially orthogonally to a chordal direction of the turbine blade (22).

## Patentansprüche

1. Wassergetriebene Turbine, umfassend einen an einem Turbinenelement (28) befestigten, langgestreckten Holm (24) einer Turbinenschaufel (22), wobei der Holm (24) aus faserverstärktem Harzverbundmaterial aufgebaut ist, wobei der Holm einen Wurzelanbauabschnitt (44), der ein Ende (46) des Holms (24) an dem Turbinenelement (28) anbaut, und mindestens einen langgestreckten Schaufeltragabschnitt (48), der sich in Längsrichtung von dem Wurzelanbauabschnitt (44) weg erstreckt, umfasst, wobei der Wurzelanbauabschnitt (44) ein Paar Flanschabschnitte (50,52) umfasst, die sich auf jeweiligen gegenüberliegenden Querseiten des Holms (24) in Querrichtung nach außen erstrecken, wobei jeder Flanschabschnitt (50,52) gegenüberliegende, in Längsrichtung voneinander beabstandete, sich in Querrichtung erstreckende Anbauflächen (56,58;60,62) und ein Befestigungsteil (26), das die Flanschabschnitte (50,52) an dem Turbinenelement (28) befestigt, aufweist, wobei das Befestigungsteil (26) ein Paar Befestigungsabschnitte (64,66) umfasst, wobei jeder Befestigungsabschnitt (64,66) gegenüberliegende, sich in Querrichtung erstreckende Stützflächen (68,70;72,74) aufweist, die jeweils mit den Anbauflächen (56,58;60,62) eines jeweiligen Flanschabschnitts (50,52) in Eingriff treten, wobei der Holm (24) ebenflächig ist und die Flanschabschnitte (50,52) in der Ebene des Holms (24) liegen.

2. Wassergetriebene Turbine, umfassend einen an einem Turbinenelement (28) befestigten, langgestreckten Holm (24) einer Turbinenschaufel (22), wobei der Holm (24) aus faserverstärktem Harzverbundmaterial aufgebaut ist, wobei der Holm einen Wurzelanbauabschnitt (44), der ein Ende (46) des Holms (24) an dem Turbinenelement (28) befestigt, und mindestens einen langgestreckten Schaufeltragabschnitt (48), der sich in Längsrichtung von dem Wurzelanbauabschnitt (44) weg erstreckt, umfasst, wobei der Wurzelanbauabschnitt (44) ein Paar Flanschabschnitte (50,52) umfasst, die sich auf jeweiligen gegenüberliegenden Querseiten des Holms (24) in Querrichtung nach außen erstrecken, wobei jeder Flanschabschnitt (50,52) gegenüberliegende, in Längsrichtung voneinander beabstandete, sich in Querrichtung erstreckende Anbauflächen (56,58;60,62) und ein Befestigungsteil (26), das die Flanschabschnitte (50,52) an dem Turbinenelement (28) befestigt, aufweist, wobei das Befestigungsteil (26) ein Paar Anbauabschnitte (64,66) umfasst, wobei jeder Anbauabschnitt (64,66) gegenüberliegende, sich in Querrichtung erstreckende Stützflächen (68,70;72,74) aufweist, die jeweils mit den Anbauflächen (56,58;60,62) eines jeweiligen Flanschabschnitts (50,52) in Eingriff treten, wobei der Holm (24) ebenflächig und im Wesentlichen T-förmig ist.

3. Wassergetriebene Turbine, umfassend einen an einem Turbinenelement (28) befestigten, langgestreckten Holm (24) einer Turbinenschaufel (22), wobei der Holm (24) aus faserverstärktem Harzverbundmaterial aufgebaut ist, wobei der Holm einen Wurzelanbauabschnitt (44), der ein Ende (46) des Holms (24) an dem Turbinenelement (28) befestigt, und mindestens einen langgestreckten Schaufeltragabschnitt (48), der sich in Längsrichtung von dem Wurzelanbauabschnitt (44) weg erstreckt, umfasst, wobei der Wurzelanbauabschnitt (44) ein Paar Flanschabschnitte (50,52) umfasst, die sich auf jeweiligen gegenüberliegenden Querseiten des Holms (24) in Querrichtung nach außen erstrecken, wobei jeder Flanschabschnitt (50,52) gegenüberliegende, in Längsrichtung voneinander beabstandete, sich in Querrichtung erstreckende Anbauflächen (56,58;60,62) und ein Befestigungsteil (26), das die Flanschabschnitte (50,52) an dem Turbinenelement (28) befestigt, aufweist, wobei das Befestigungsteil (26) ein Paar Anbauabschnitte (64,66) umfasst, wobei jeder Anbauabschnitt (64,66) gegenüberliegende, sich in Querrichtung erstreckende Stützflächen (68,70;72,74) aufweist, die jeweils mit den Anbauflächen (56,58;60,62) eines jeweiligen Flanschabschnitts (50,52) in Eingriff treten, wobei der Holm (300) einen Querschnitt in Form eines Kreuzes aufweist und zwei Paare von Flanschabschnitten (302,304;306,308) aufweist, wobei jedes Paar entlang einer jeweiligen der zwei orthogonalen Ebenen des Kreuzes orientiert ist und das Befestigungsteil zwei Paare von Anbauabschnitten umfasst, wobei jedes Paar Anbauabschnitte an einem jeweiligen Paar Flanschabschnitte (302,304;306,308) befestigt ist.

4. Wassergetriebene Turbine nach einem der vorangehenden Ansprüche, wobei eine Vielzahl der Holme (24) um eine drehbare Nabe (80) des Turbinenelements (82) befestigt ist und ein Paar der Befestigungsteile (84,86) vorgesehen ist, wobei die Befestigungsteile (84,86) in einer Richtung entlang einer Drehachse der Nabe (80) getrennt sind und jedes Befestigungsteil (84,86) auf einer jeweiligen von zwei gegenüberliegenden Seiten der Holme (24) an Flanschabschnitten (50a,50b;52a,52b) befestigt ist, wobei optional jedes Befestigungsteil (84,86) ringförmig ist.

5. Wassergetriebene Turbine nach einem der vorangehenden Ansprüche, wobei die gegenüberliegenden, sich in Querrichtung erstreckenden Anbauflächen (56,58;60,62) jedes Flanschabschnitts (50,52) eine erste Stirnfläche (76,77) und eine zweite Zwischenfläche (78,79) umfassen, wobei die erste Stirnfläche (76,77) unter einem spitzen Winkel zu einer Längsachse des langgestreckten Schaufeltragabschnitts (48) geneigt ist, um einen nach außen verjüngten Flanschabschnitt (50,52) zu bilden, wobei optional (i) die erste Stirnfläche (76,77) unter einem spitzen Winkel von von mehr als 45 Grad bis weniger als 90 Grad gegenüber der Längsachse des langgestreckten Schaufeltragabschnitts (48) geneigt ist, und/oder (ii) (a) die zweite Zwischenfläche (78,79) orthogonal zur Längsachse des langgestreckten Schaufeltragabschnitts (48) ist, oder (b) wobei die zweite Zwischenfläche (78,79) unter einem stumpfen Winkel zur Längsachse des langgestreckten Schaufeltragabschnitts (48) geneigt ist, wobei die zweite Zwischenfläche (78,79) optional unter einem stumpfen Winkel von von mehr als 90 Grad bis weniger als 135 Grad gegenüber der Längsachse des langgestreckten Schaufeltragabschnitts (48) geneigt ist.

6. Wassergetriebene Turbine nach einem der Ansprüche 1 bis 5, wobei das faserverstärkte Harzverbundmaterial einen im Wesentlichen ebenflächigen Stapel aus aneinander laminierten faserhaltigen Platten (36) umfasst, wobei sich die Platten (30) in einer Längsrichtung des Holms (24) erstrecken, wobei optional (i) der langgestreckte Schaufeltragabschnitt (48) unidirektionale Fasern umfasst, die unter einem Winkel von nicht mehr als +/- 20 Grad zu einer Längsachse des langgestreckten Schaufeltragabschnitts (48) orientiert sind, oder (ii) der langgestreckte Schaufeltragabschnitt (48) unidirektionale Fasern umfasst, die im Wesentlichen entlang einer Längsachse des langgestreckten Schaufeltragabschnitts (48) orientiert sind, wobei weiter optional der Anbauabschnitt (44) zur Längsachse geneigte Fasern umfasst.

7. Wassergetriebene Turbine nach Anspruch 6, wobei mindestens eine der Platten (30) ein erstes Fasermaterial an dem Anbauabschnitt (44) und ein zweites Fasermaterial an dem langgestreckten Schaufeltragabschnitt (48) umfasst, und/oder wobei mindestens eine der Platten (30) eine erste Faserorientierung an dem Anbauabschnitt (44) und eine zweite Faserorientierung an dem langgestreckten Schaufeltragabschnitt (48) umfasst.

8. Wassergetriebene Turbine nach einem der vorangehenden Ansprüche, weiter umfassend einen ersten und einen zweiten Turbinenschaufelabschnitt (32,34), die einander gegenüberliegen, und jeweils eine jeweilige lasttragende Schaufeloberfläche definieren, und wobei sich der Holm (24) zwischen dem ersten und dem zweiten Turbinenschaufelabschnitt (32,34) befindet, wobei das faserverstärkte Harzverbundmaterial einen im Wesentlichen ebenflächigen Stapel aus aneinander laminierten faserhaltigen Platten (30) umfasst, wobei sich die Platten (30) in einer Längsrichtung des Holms (24) erstrecken und die Platten (30) des Stapels in einer Ebene liegen, die sich zwischen dem ersten und dem zweiten Turbinenschaufelabschnitt (32,34) erstreckt, wobei optional (a) die entgegengesetzten Ränder des Stapels an entgegengesetzten inneren Oberflächen des ersten und des zweiten Turbinenschaufelabschnitts (32,34) angebracht sind, und/oder (b) die Platten (30) des Stapels in einer Ebene liegen, die sich im Wesentlichen orthogonal zu einer Sehnenrichtung der Turbinenschaufel (22) erstreckt.

9. Wassergetriebene Turbine nach einem der vorangehenden Ansprüche, bei der es sich um eine Axialstromturbine handelt, die mehrere sich in Radialrichtung erstreckende Turbinenschaufeln (22) umfasst, die an einer drehbaren Nabe (28) fixiert sind, die durch Wasserbewegung über die Turbinenschaufeloberflächen veranlasst wird, sich um eine Achse zu drehen, oder bei der es sich um eine Querstromturbine handelt, bei der die Turbinenschaufel zur Drehung durch Wasserbewegung über die Turbinenschaufeloberflächen, im Wesentlichen um eine Längsachse der Turbinenschaufel, an einer Halterung fixiert ist.

10. Langgestreckter Holm (24) einer Turbinenschaufel (22) für eine wassergetriebene Turbine, wobei der Holm (24) aus faserverstärktem Harzverbundmaterial aufgebaut ist, wobei der Holm (24) einen Wurzelanbauabschnitt (44), der dazu angepasst ist, ein Ende (46) des Holms (24) an dem Turbinenelement (28) anzubauen, und mindestens einen langgestreckten Schaufeltragabschnitt (48), der sich in Längsrichtung von dem Wurzelanbauabschnitt (44) weg erstreckt, umfasst, wobei der Wurzelanbauabschnitt (44) ein Paar nach außen verjüngte Flanschabschnitte (50,52) umfasst, die sich auf jeweiligen gegenüberliegenden Querseiten des Holms (24) in Querrichtung nach außen erstrecken, wobei jeder Flanschabschnitt (50,52) gegenüberliegende, sich in Querrichtung erstreckende Anbauflächen (56,58;60,62) aufweist, die in Längsrichtung voneinander beabstandet sind und eine Verjüngung bilden, wobei der Holm (24) ebenflächig ist und die Flanschabschnitte (50,52) in der Ebene des Holms (24) liegen.

11. Langgestreckter Holm (24) einer Turbinenschaufel (22) für eine wassergetriebene Turbine, wobei der Holm (24) aus faserverstärktem Harzverbundmaterial aufgebaut ist, wobei der Holm (24) einen Wurzelanbauabschnitt (44), der dazu angepasst ist, ein Ende (46) des Holms (24) an dem Turbinenelement (28) anzubauen, und mindestens einen langgestreckten Schaufeltragabschnitt (48), der sich in Längsrichtung von dem Wurzelanbauabschnitt (44) weg erstreckt, umfasst, wobei der Wurzelanbauabschnitt (44) ein Paar nach außen verjüngte Flanschabschnitte (50,52) umfasst, die sich auf jeweiligen gegenüberliegenden Querseiten des Holms (24) in Querrichtung nach außen erstrecken, wobei jeder Flanschabschnitt (50,52) gegenüberliegende, sich in Querrichtung erstreckende Anbauflächen (56,58;60,62) aufweist, die in Längsrichtung voneinander beabstandet sind und eine Verjüngung bilden, wobei der Holm (300) einen Querschnitt in Form eines Kreuzes aufweist und zwei Paare von Flanschabschnitten (302,304;306,308) aufweist, wobei jedes Paar entlang einer jeweiligen von zwei orthogonalen Ebenen des Kreuzes orientiert ist und das Befestigungsteil zwei Paare von Befestigungsabschnitten umfasst, wobei jedes Paar Befestigungsabschnitte an einem jeweiligen Paar Flanschabschnitte (302,304;306,308) befestigt ist.

12. Langgestreckter Holm nach Anspruch 10 oder Anspruch 11, wobei die gegenüberliegenden, sich in Querrichtung erstreckenden Anbauflächen (56,58;60,62) jedes Flanschabschnitts (50,52) eine erste Stirnfläche (76,77) und eine zweite Zwischenfläche (78,79) umfassen, wobei die erste Stirnfläche (76,77) unter einem spitzen Winkel zu einer Längsachse des langgestreckten Schaufeltragabschnitts (48) geneigt ist, wobei die erste Stirnfläche (76,77) unter einem spitzen Winkel von von mehr als 45 Grad bis weniger als 90 Grad gegenüber der Längsachse des langgestreckten Schaufeltragabschnitts (48) geneigt ist, und wobei optional (i) die zweite Zwischenfläche (78,79) orthogonal zur Längsachse des langgestreckten Schaufeltragabschnitts (48) ist oder (ii) die zweite Zwischenfläche (78,79) unter einem stumpfen Winkel zur Längsachse des langgestreckten Schaufeltragabschnitts (48) geneigt ist, wobei die zweite Zwischenfläche (78,79) optional unter einem stumpfen Winkel von von mehr als 90 Grad bis weniger als 135 Grad gegenüber der Längsachse des langgestreckten Schaufeltragabschnitts (48) geneigt ist.

13. Langgestreckter Holm (24) nach einem der Ansprüche 10 bis 12, wobei das faserverstärkte Harzverbundmaterial einen im Wesentlichen ebenflächigen Stapel von aneinander laminierten faserhaltigen Platten (70) umfasst, wobei sich die Platten (30) in einer Längsrichtung des Holms (24) erstrecken, wobei optional (i) der Holm (300) gekrümmt ist wobei die im Wesentlichen ebenflächigen Platten (30) eine Krümmung um mindestens eine Achse in der Ebene der Platten (30) aufweisen, und/oder (ii) die ersten Platten pultrudierte Platten umfassen.

14. Langgestreckter Holm (24) nach Anspruch 13, wobei der langgestreckte Schaufeltragabschnitt (48) unidirektionale Fasern umfasst, die unter einem Winkel von nicht mehr als +/- 20 Grad zu einer Längsachse des langgestreckten Schaufeltragabschnitts (48) geneigt sind, oder wobei der langgestreckte Schaufeltragabschnitt (48) unidirektionale Fasern umfasst, die im Wesentlichen entlang einer Längsachse des langgestreckten Schaufeltragabschnitts (48) orientiert sind, wobei optional der Anbauabschnitt (44) zur Längsachse geneigte Fasern umfasst und/oder jede Platte (30) eine Vielzahl laminierter faserhaltiger Lagen umfasst, wobei mindestens einige der Lagen weiter optional unidirektionale Fasern aufweisen und mindestens einiger der Lagen mehrachsige Fasern aufweisen.

15. Langgestreckter Holm nach Anspruch 13 oder 14, wobei mindestens eine der Platten (30) ein erstes Fasermaterial an dem Anbauabschnitt (44) und ein zweites Fasermaterial an dem langgestreckten Schaufeltragabschnitt (48) umfasst, und/oder wobei mindestens eine der Platten (30) eine erste Faserorientierung an dem Anbauabschnitt (44) und eine zweite Faserorientierung an dem langgestreckten Schaufeltragabschnitt (48) umfasst.

16. Wasserturbinenschaufel, umfassend einen langgestreckten Holm (24) nach einem der Ansprüche 10 bis 15, wobei die Schaufel einen ersten und einen zweiten Turbinenschaufelabschnitt (32,34), die einander gegenüberliegen, und jeweils eine jeweilige lasttragende Schaufeloberfläche definieren, umfasst, und wobei sich der Holm (24) zwischen dem ersten und dem zweiten Turbinenschaufelabschnitt (32,34) befindet, wobei optional das faserverstärkte Harzverbundmaterial einen im Wesentlichen ebenflächigen Stapel aus aneinander laminierten faserhaltigen Platten (30) umfasst, wobei sich die Platten (30) in einer Längsrichtung des Holms (24) erstrecken und die Platten (30) des Stapels in einer Ebene liegen, die sich zwischen dem ersten und dem zweiten Turbinenschaufelabschnitt (32,34) erstreckt, wobei weiter optional (i) die entgegengesetzten Ränder des Stapels an entgegengesetzten inneren Oberflächen des ersten und des zweiten Turbinenschaufelabschnitts (32,34) angebracht sind, und/oder (ii) die Platten (30) des Stapels in einer Ebene liegen, die sich im Wesentlichen orthogonal zu einer Sehnenrichtung der Turbinenschaufel (22) erstreckt.

## Revendications

1. Une turbine entraînée par l'eau incluant un longeron allongé (24) de pale de turbine (22) fixé à un élément de turbine (28), le longeron (24) étant composé d'un matériau composite de résine renforcée de fibres, le longeron comprenant une partie de montage d'emplanture (44) qui permet de monter une extrémité (46) du longeron (24) sur l'élément de turbine (28) et au moins une partie de support de pale allongée (48) s'écartant longitudinalement de la partie de montage d'emplanture (44), la partie de montage d'emplanture (44) incluant une paire de parties brides (50,52) s'étendant transversalement vers l'extérieur sur les côtés transversaux opposés respectifs du longeron (24), chaque partie bride (50,52) ayant des surfaces de montage opposées s'étendant transversalement (56,58; 60,62) qui sont mutuellement espacées longitudinalement, et une fixation (26) qui fixe les parties brides (50,52) sur l'élément de turbine (28), la fixation (26) incluant une paire de parties fixations (64,66), chaque partie fixation (64,66) ayant des surfaces porteuses opposées s'étendant transversalement (68,70; 72,74) qui coopèrent respectivement avec les surfaces de montage (56,58; 60,62) d'une partie bride respective (50,52), dans laquelle le longeron (24) est plan et les parties brides (50,52) sont dans le plan du longeron (24).

2. Une turbine entraînée par l'eau incluant un longeron allongé (24) de pale de turbine (22) fixé à un élément de turbine (28), le longeron (24) étant composé d'un matériau composite de résine renforcée de fibres, le longeron comprenant une partie de montage d'emplanture (44) qui permet de monter une extrémité (46) du longeron (24) sur l'élément de turbine (28) et au moins une partie de support de pale allongée (48) s'écartant longitudinalement de la partie de montage d'emplanture (44), la partie de montage d'emplanture (44) incluant une paire de parties brides (50,52) s'étendant transversalement vers l'extérieur sur les côtés transversaux opposés respectifs du longeron (24), chaque partie bride (50,52) ayant des surfaces de montage opposées s'étendant transversalement (56,58; 60,62) qui sont mutuellement espacées longitudinalement, et une fixation (26) qui fixe les parties brides (50,52) sur l'élément de turbine (28), la fixation (26) incluant une paire de parties fixations (64,66), chaque partie fixation (64,66) ayant des surfaces porteuses opposées s'étendant transversalement (68,70; 72,74) qui coopèrent respectivement avec les surfaces de montage (56,58; 60,62) d'une partie bride respective (50,52), dans laquelle le longeron (24) est plan et sensiblement en forme de T.

3. Une turbine entraînée par l'eau incluant un longeron allongé (24) de pale de turbine (22) fixé à un élément de turbine (28), le longeron (24) étant composé d'un matériau composite de résine renforcée de fibres, le longeron comprenant une partie de montage d'emplanture (44) qui permet de monter une extrémité (46) du longeron (24) sur l'élément de turbine (28) et au moins une partie de support de pale allongée (48) s'écartant longitudinalement de la partie de montage d'emplanture (44), la partie de montage d'emplanture (44) incluant une paire de parties brides (50,52) s'étendant transversalement vers l'extérieur sur les côtés transversaux opposés respectifs du longeron (24), chaque partie bride (50,52) ayant des surfaces de montage opposées s'étendant transversalement (56,58; 60,62) qui sont mutuellement espacées longitudinalement, et une fixation (26) qui fixe les parties brides (50,52) sur l'élément de turbine (28), la fixation (26) incluant une paire de parties fixations (64,66), chaque partie fixation (64,66) ayant des surfaces porteuses opposées s'étendant transversalement (68,70; 72,74) qui coopèrent respectivement avec les surfaces de montage (56,58; 60,62) d'une partie bride respective (50,52), dans laquelle le longeron (300) a une section transversale en forme de croix et a deux paires de parties brides (302,304; 306,308), chaque paire étant alignée respectivement le long d'un des deux plans perpendiculaires de la croix, et la fixation inclut deux paires de parties fixations, chaque paire de parties fixations étant fixée respectivement à une paire de parties brides (302,304; 306,308).

4. Une turbine entraînée par l'eau selon l'une quelconque des revendications précédentes dans laquelle une pluralité de longerons (24) sont montés autour d'un moyeu rotatif (80) de l'élément de turbine (82), et une paire de fixations (84,86) est fournie, les fixations (84,86) étant séparées dans une direction le long d'un axe de rotation du moyeu (80) et chaque fixation (84,86) étant fixée aux parties brides (50a,50b; 52a,52b) sur respectivement un des deux côtés opposés des longerons (24), en option dans laquelle chaque fixation (84,86) est annulaire.

5. Une turbine entraînée par l'eau selon l'une quelconque des revendications précédentes dans laquelle les surfaces de montage opposées s'étendant transversalement (56,58; 60,62) de chaque partie bride (50,52) incluent une première surface d'extrémité (76,77) et une deuxième surface intermédiaire (78,79), la première surface d'extrémité (76,77) étant inclinée à un angle aigu par rapport à un axe longitudinal de la partie de support de pale allongée (48) pour former une partie bride effilée vers l'extérieur (50,52), en option dans laquelle (i) la première surface d'extrémité (76,77) est inclinée à un angle aigu compris entre plus de 45 degrés et moins de 90 degrés par rapport à l'axe longitudinal de la partie de support de pale allongée (48), et/ou (ii) (a) la deuxième surface intermédiaire (78,79) est perpendiculaire à l'axe longitudinal de la partie de support de pale allongée (48), ou (b) dans laquelle la deuxième surface intermédiaire (78,79) est inclinée à un angle obtus par rapport à l'axe longitudinal de la partie de support de pale allongée (48), la deuxième surface intermédiaire (78,79) étant inclinée en option à un angle obtus compris entre plus de 90 degrés et moins de 135 degrés relative par rapport à l'axe longitudinal de la partie de support de pale allongée (48).

6. Une turbine entraînée par l'eau selon l'une quelconque des revendications 1 à 5, dans laquelle le matériau composite de résine renforcée de fibres inclut un empilement sensiblement plan de feuilles fibreuses (36) stratifiées ensemble, les feuilles (30) s'étendant dans une direction longitudinale du longeron (24), en option dans laquelle (i) la partie de support de pale allongée (48) inclut des fibres unidirectionnelles alignées à un angle égal ou inférieur à +/- 20 degrés par rapport à un axe longitudinal de la partie de support de pale allongée (48), ou (ii) la partie de support de pale allongée (48) inclut des fibres unidirectionnelles sensiblement alignées le long d'un axe longitudinal de la partie de support de pale allongée (48), en option en outre dans laquelle la partie de montage (44) inclut des fibres inclinées par rapport à l'axe longitudinal.

7. Une turbine entraînée par l'eau selon la revendication 6, dans laquelle au moins une des feuilles (30) comprend un premier matériau de fibres à la partie de montage (44) et un deuxième matériau de fibres à la partie de support de pale allongée (48), et/ou dans laquelle au moins une des feuilles (30) comprend une première orientation de fibres à la partie de montage (44) et une deuxième orientation de fibres à la partie de support de pale allongée (48).

8. Une turbine entraînée par l'eau selon l'une quelconque des revendications précédentes, comprenant en outre des première et deuxième parties de pale de turbine opposées (32,34), chacune définissant respectivement une surface de pale porteuse de charge, et le longeron (24) étant situé entre les première et deuxième parties de pale de turbine (32,34), dans laquelle le matériau composite de résine renforcée de fibres inclut un empilement sensiblement plan de feuilles fibreuses (30) stratifiées ensemble, les feuilles (30) s'étendant dans une direction longitudinale du longeron (24) et les feuilles (30) de l'empilement sont situées dans un plan s'étendant entre les première et deuxième parties de pale de turbine (32,34), en option dans laquelle (a) les bords opposés de l'empilement sont assujettis aux faces intérieures opposées des première et deuxième parties de pale de turbine (32,34), et/ou (b) les feuilles (30) de l'empilement sont situées dans un plan s'étendant sensiblement perpendiculairement à une direction chordale de la pale de turbine (22).

9. Une turbine entraînée par l'eau selon l'une quelconque des revendications précédentes, qui est une turbine à flux axial incluant plusieurs pales de turbine radiales (22) fixées à un moyeu rotatif (28) qui est mis en rotation autour d'un axe par le déplacement de l'eau sur les surfaces de pale de turbine, ou qui est une turbine à flux croisé incluant la pale de turbine fixée à un support pour être en rotation sensiblement par rapport à un axe longitudinal de la pale de turbine par le déplacement de l'eau sur les surfaces de pale de turbine.

10. Un longeron allongé (24) de pale de turbine (22) pour une turbine entraînée par l'eau, le longeron (24) étant composé d'un matériau composite de résine renforcée de fibres, le longeron (24) comprenant une partie de montage d'emplanture (44) adaptée pour monter une extrémité (46) du longeron (24) sur l'élément de turbine (28) et au moins une partie de support de pale allongée (48) s'écartant longitudinalement de la partie de montage d'emplanture (44), la partie de montage d'emplanture (44) incluant une paire de parties brides effilées vers l'extérieur (50,52) s'étendant transversalement vers l'extérieur sur les côtés transversaux opposés respectifs du longeron (24), chaque partie bride (50,52) ayant des surfaces de montage opposées s'étendant transversalement (56,58; 60,62) qui sont mutuellement espacées longitudinalement et forment un cône dans lequel le longeron (24) est plan et les parties brides (50,52) sont dans le plan du longeron (24).

11. Un longeron allongé (24) de pale de turbine (22) pour une turbine entraînée par l'eau, le longeron (24) étant composé d'un matériau composite de résine renforcée de fibres, le longeron (24) comprenant une partie de montage d'emplanture (44) adaptée pour monter une extrémité (46) du longeron (24) sur l'élément de turbine (28) et au moins une partie de support de pale allongée (48) s'écartant longitudinalement de la partie de montage d'emplanture (44), la partie de montage d'emplanture (44) incluant une paire de parties brides effilées vers l'extérieur (50,52) s'étendant transversalement vers l'extérieur sur les côtés transversaux opposés respectifs du longeron (24), chaque partie bride (50,52) ayant des surfaces de montage opposées s'étendant transversalement (56,58; 60,62) qui sont mutuellement espacées longitudinalement et forment un cône dans lequel le longeron (300) a une section transversale en forme de croix et a deux paires de parties brides (302,304; 306,308), chaque paire étant alignée respectivement le long d'un des deux plans perpendiculaires de la croix, et la fixation inclut deux paires de parties fixations, chaque paire de parties fixations étant fixée respectivement à une paire de parties brides (302,304; 306,308).

12. Un longeron de pale selon la revendication 10 ou la revendication 11, dans lequel les surfaces de montage opposées s'étendant transversalement (56,58; 60,62) de chaque partie bride (50,52) incluent une première surface d'extrémité (76,77) et une deuxième surface intermédiaire (78,79), la première surface d'extrémité (76,77) étant inclinée à un angle aigu par rapport à un axe longitudinal de la partie de support de pale allongée (48), dans lequel la première surface d'extrémité (76,77) est inclinée à un angle aigu compris entre plus de 45 degrés et moins de 90 degrés par rapport à l'axe longitudinal de la partie de support de pale allongée (48), et en option dans lequel (i) la deuxième surface intermédiaire (78,79) est perpendiculaire à l'axe longitudinal de la partie de support de pale allongée (48), ou (ii) la deuxième surface intermédiaire (78,79) est inclinée à un angle obtus par rapport à l'axe longitudinal de la partie de support de pale allongée (48), la deuxième surface intermédiaire (78,79) étant inclinée en option à un angle obtus compris entre plus de 90 degrés et moins de 135 degrés par rapport à l'axe longitudinal de la partie de support de pale allongée (48).

13. Un longeron allongé (24) selon l'une quelconque des revendications 10 à 12, dans lequel le matériau composite de résine renforcée de fibres inclut un empilement sensiblement plan de feuilles fibreuses (70) stratifiées ensemble, les feuilles (30) s'étendant dans une direction longitudinale du longeron (24), en option (i) dans lequel le longeron (300) est courbe, les feuilles fibreuses sensiblement planes (30) ayant une courbe par rapport à au moins un axe dans le plan des feuilles (30), et/ou (ii) dans lequel les premières feuilles comprennent des feuilles pultrudées.

14. Un longeron allongé (24) selon la revendication 13 dans lequel la partie de support de pale allongée (48) inclut des fibres unidirectionnelles alignées à un angle égal ou inférieur à +/- 20 degrés par rapport à un axe longitudinal de la partie de support de pale allongée (48), ou dans lequel la partie de support de pale allongée (48) inclut des fibres unidirectionnelles sensiblement alignées le long d'un axe longitudinal de la partie de support de pale allongée (48), en option dans lequel la partie de montage (44) inclut des fibres inclinées par rapport à l'axe longitudinal, et/ou chaque feuille (30) comprend une pluralité de nappes fibreuses stratifiées, au moins certaines des nappes ayant en outre en option des fibres unidirectionnelles et au moins certaines des nappes ont des fibres multiaxiales.

15. Un longeron de pale selon la revendication 13 ou la revendication 14, dans lequel au moins une des feuilles (30) comprend un premier matériau de fibres à la partie de montage (44) et un deuxième matériau de fibres à la partie de support de pale allongée (48), et/ou dans lequel au moins une des feuilles (30) comprend une première orientation de fibres à la partie de montage (44) et une deuxième orientation de fibres à la partie de support de pale allongée (48).

16. Une pale de turbine à eau incluant un longeron allongé (24) selon l'une quelconque des revendications 10 à 15, la pale comprenant des première et deuxième parties de pale de turbine opposées (32,34), chacune définissant respectivement une surface de pale porteuse de charge, et le longeron (24) étant situé entre les première et deuxième parties de pale de turbine (32,34), en option dans laquelle le matériau composite de résine renforcée de fibres inclut un empilement sensiblement plan de feuilles fibreuses (30) stratifiées ensemble, les feuilles (30) s'étendant dans une direction longitudinale du longeron (24) et les feuilles (30) de l'empilement sont situées dans un plan s'étendant entre les première et deuxième parties de pale de turbine (32,34), en option en outre dans laquelle (i) les bords opposés de l'empilement sont assujettis aux faces intérieures opposées des première et deuxième parties de pale de turbine (32,34), et/ou (ii) les feuilles (30) de l'empilement sont situées dans un plan s'étendant sensiblement perpendiculairement à une direction chordale de la pale de turbine (22).
